# EUROPEAN PATENT SPECIFICATION

(11) **EP 1 860 885 B1**
(45) Date of publication and mention of the grant of the patent: **02.11.2011**
(21) Application number: 06252668.6
(22) Date of filing: 23.05.2006
(51) Int. Cl.: H04N 7/26, H04N 17/00

(54) **Video transport stream analyser**
Analyse von Videotransportströmen
Analyseur de trains de transport MPEG

(43) Date of publication of application: 28.11.2007
(73) Proprietor: Tektronix International Sales GmbH, Neuhausen 82 Schaffhausen (CH)
(72) Inventor: Walsh, Sean Thomas Patrick, Histon Cambridge CB4 9ZR (GB)
(74) Representative: Want, Clifford James

(56) References cited:
- EP-A- 0 869 684
- EP-A- 1 244 312
- WO-A-2004/072820
- WO-A1-00/48407
- WO-A1-2004/008780
- WO-A1-2005/125220
- US-A1- 2002 071 614
- US-A1- 2002 149 675
- US-B1- 6 208 643
- EUROPEAN BROADCASTING UNION/EBU; ETSI STANDARDS SECRETARIAT EBU/CENELEC/ETSI-JTC: "Digital Broadcasting (DVB): Measurement guidelines for DVB systems ETR 290. Reference DTR/JTC-00DVB-22" ETSI STANDARDS, EUROPEAN TELECOMMUNICATIONS STANDARDS INSTITUTE, vol. BC, May 1997 (1997-05), XP014011416 Sophia Antipolis, FR
- RAFAEL SÁNCHEZ ET AL: "Service Performance Verification and Benchmarking", 1 January 2005 (2005-01-01), END-TO-END QUALITY OF SERVICE OVER CELLULAR NETWORKS : DATA SERVICES PERFORMANCE AND OPTIMIZATION IN 2G/3G, CHICHESTER : WILEY, US LNKD- DOI:10.1002/047001587X.CH6, PAGE(S) 186 - 242, XP008126155, ISBN: 978-0-470-01180-5 [retrieved on 2006-01-11]
- ACTERNA ET AL: "Key Quality Indicator Definition", 3GPP DRAFT; S5B020148 TMF_WSMT_KQI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Miami; 20020303, 3 March 2002 (2002-03-03), XP050294135, [retrieved on 2002-03-03]
- ERICSSON: "Streaming quality metrics - Proposal for a KPI based approach", 3GPP DRAFT; S4-030788(STREAMING QOE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Tampere, Finland; 20031121, 21 November 2003 (2003-11-21), XP050286419, [retrieved on 2003-11-21]
- RIX A.: "Advances in objective quality assessment of speech over analogue and packet-based networks", IEE COLLOQUIUM ON DATA COMPRESSION: METHODS AND IMPLEMENTATIONS (REF. NO. 1999/150), 1999, XP006502553,
- PIPINO L.L. ET AL: "Data Quality Assessment", COMMUN. ACM, 2002, pages 211-218, XP001091579, NEW YORK, US
- TAN K.T.; GHANBARI M.: "A Multi-Metric Objective Picture Quality Measurement Model for MPEG Video", IEEE TRANSACTIONS ON CIRCUITS AND SYSTEMS FOR VIDEO TECHNOLOGY, October 2000 (2000-10), pages 1208-1213, XP011014126,

## Description

This invention relates to transport stream testing and measurement, in particular testing and measurement of video transport streams and more particularly of MPEG transport streams.

Cable and satellite networks, such as networks carrying MPEG transport streams, typically carry a large number of transport streams each carrying a small number of television channels. With television transmission over the Internet a number of channels being carried will rise to thousands. There is also an increasing requirement to monitor customised channels and video-on-demand. Network operators have a requirement to monitor quality of transmission of the channels as perceived by an end user. This requirement is presently met, at least partially, by operators monitoring banks of screens displaying programmes being transmitted on each channel.

Automated content-based single-ended (i.e. no reference) quality analysis for passive monitoring of an MPEG transport stream is found to be of minimal value to a network operator since it is difficult to separate encoding artefacts from original source material. Also, the computational requirements for the tests limit testing to a very small subset of the network traffic. The performance is determined almost entirely by codec, user equipment, and operational environment, none of which can be addressed by the network operator.

On the other hand, transport-based scoring for passive monitoring of a MPEG transport stream has been found to be very valuable to network operators. Transport-based scoring can be performed for all customers at all times. Transport monitoring allows for all degradation introduced by packet transport to be measured. Encryption of elementrary stream PIDs has minimal effect on measurements. Factors affecting the measured performance are under control of the network operator.

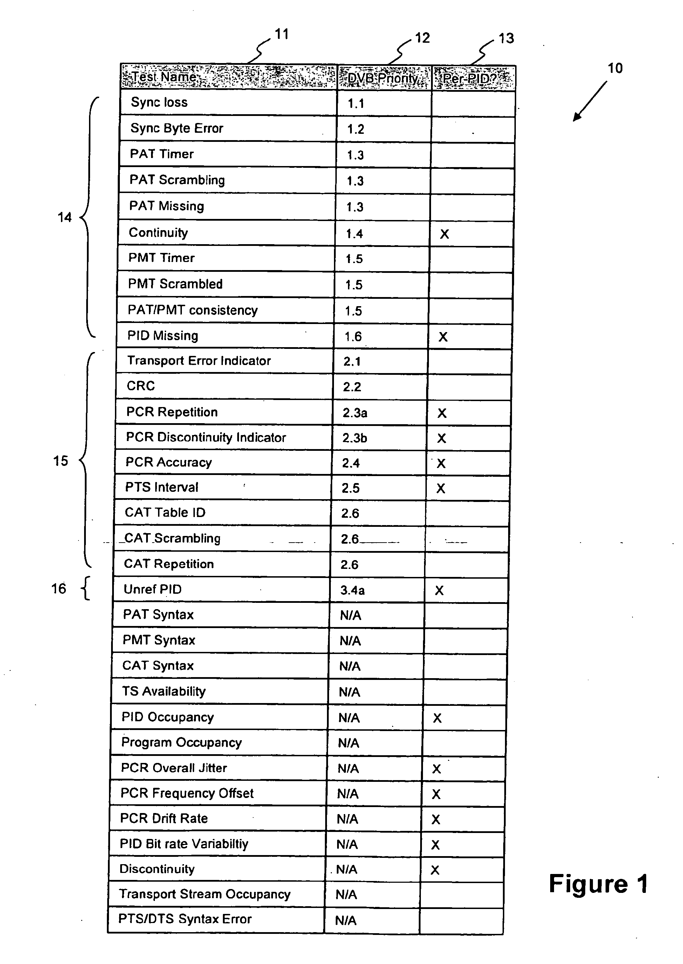

The table 10 in Figure 1 gives examples in the first column of tests 11 carried out on a decoded MPEG-2 transport stream. The priority 12 shown in the second column of the table is the significance of the test as viewed by the Digital Video Broadcasting (DVB) consortium as provided in, for example European Broadcasting Union; ETSI Standards Secretariat EBU/CENELEC/ETSI-JTC: "Digital Broadcasting (DVB): Measuremnt guidelines for DVB systems ETR 290. reference DTR/JTC-00DVB-22" ETSI Standards, European Telecommunications Standards Institute, vol. BC, Ma 1997, Sophia Antipolis, France. Some tests are not part of a DVB specification, in which case no priority is shown in the table.

However, known analysing or monitoring equipment indicates when, for example, synchronisation is lost but this alone is not a sufficiently useful indication of transport synchronisation quality, because if synchronisation is lost and regained quickly then the transport quality is considered to be better than if synchronisation is continually being lost and regained, but this distinction is not indicated by current monitoring equipment.

Network operators also require more information on continuity errors (a number of errors per packet identifier (PID)) than is available in the prior art. A measure of continuity errors is also a transport quality metric.

Current monitoring equipment signals (e.g. by a light-emitting diode colour change, SNMP (Simple Network Management Protocol) trap etc.) when a state, i.e. result, of a test changes. A simple way to combine these results for a plurality of tests into an overall quality score is to have an overall test status that represents the worst status of any test. This is currently implemented as an "Any Stream" error in which any error results in, for example, a bank of warning lights without any indication of the nature or seriousness of the error. Therefore, this is a very coarse quality measurement, in that, for example, an unreferenced PID and a loss of synchronisation are indicated as having a same impact on quality, whereas clearly a loss of synchronisation has a much greater impact on perceived quality.

US 2002/0149675 discloses cyclically monitoring a quality of service in a digital television transmission link by pre-selecting a first parameter representative of synchronization of equipment in the link and a second parameter representative of degradation in a link and determining maximum variations of the two parameters. The first and second parameters may each be dependent on a plurality of analysis parameters.

EP 1244312 discloses assessing quality of audiovisual material by measuring audio and video quality and computing from these a combined measure using a parameter indicative of a degree of motion represented by the video, the computation employs one of a plurality of algorithms selected in dependence on the value of the parameter.

US 2008/0211918 discloses a method and device for determining the quality of a complex transmission signal in which moduli of deviations of values of measured parameters from a respective reference value are scaled dependent on maximum possible deviations from the respective reference value to render the values dimensionless. The measured deviation is scaled by the maximum allowed deviation. If the measured value of a parameter is above or below a range of values defined by a maximum value and a minimum value the parameter is assigned the maximum or minimum value respectively. The influence of the deviation of the value of the parameter on the quality of the transmission is adjusted by a weighting value. The scaled deviations are weighted according to some predetermined assessment of their effect on the quality of the signal and a quality figure obtained by averaging the effects.

Rafael Sánchez et al; Service performance verification and benchmarking, in G. Gómez & R. Sánchez (eds.) End-to-end quality of service over cellular networks: data services performance and optimization in 2G/3G; 2005; London, Wiley; pp 186-242 discusses key performance indicators for mobile radio data networks, including a subjective Mean Opinion Score.

Actema et al; Key quality indicator definition 3GPP Draft; S5B020148 TMF_WSMT_KQI, 3^{rd} Generation Partnership Project, Mobile Competence Centre; vol. SA WG5 No. Miami 20020303, 3^{rd} March 2002 discloses Key Quality Indicators for wireless networks which generally aggregate a number of KPIs.

Ericsson; Streaming quality metrics - proposal for KPI-based approach 3GPP Draft; S4-030788 (Streaming QOE), 3^{rd} Generation Partnership Project, Mobile Competence Centre; vol. SA WG4 No. Tampere, Finland 20031121, 21 November 2003 describes a KPI approach to obtaining a QoS metric for streaming services.

It is an object of the present invention at least to ameliorate the aforesaid disadvantages in the prior art.

According to a first aspect of the invention there is provided an apparatus arranged to analyse a multimedia transport stream, the apparatus comprising: decoding means arranged to decode the transport stream; analysing means arranged to perform a plurality of tests on the decoded transport stream, characterised by: calculating means arranged to calculate a ratio of failed to total instances of each test per unit time to obtain a test failure ratio for each test respectively; weighting means arranged to assign a weighting, based on a predetermined significance of the test, to each test to obtain a respective test weighting; and averaging means to calculate a weighted average of the test failure ratios using the respective test weightings to determine a key performance indicator for the transport stream.

Preferably, the analysing means is arranged to perform a plurality of tests of differing significance rankings respectively; and the weighting means is arranged to assign weightings using the respective rankings of the tests.

Conveniently, the analysing means is arranged to perform a plurality of tests in each of a plurality of classes of tests of differing priorities of the classes respectively and the weighting means is arranged to weight the test ratios with the respective priorities of the classes.

Advantageously, the analysing means is arranged to perform a plurality of tests with differing significance rankings respectively in each of a plurality of classes of differing priorities of the classes respectively and the weighting means is arranged to weight the respective test ratios dependent upon the respective rankings within the classes and the averaging means is arranged to determine a respective key performance indicator for at least one of the classes of tests.

Conveniently, the weighting means is arranged to assign a weighting to each class of tests based on a priority of the class of tests and the averaging means is arranged to determined a weighted average of the key performance indicators of the at least one class of tests to produce an overall key performance indicator.

Advantageously, the analysing means is arranged to perform a plurality of tests with differing significance rankings respectively in each of a plurality of classes of tests of differing priorities of the classes respectively and the weighting means is arranged to weight the respective test ratios with a product of the respective rankings within the classes and the respective priorities of the classes.

Conveniently, the respective test weightings are derived iteratively, to obtain a key performance indicator matching a subjective assessment of the transport stream quality.

Preferably, the analysing means is arranged to determine contents of a tested packet of the transport stream, as identified by a packet identifier (PID) of the packet, and the weighting means is arranged to vary a respective weighting per packet accordingly.

Advantageously, the apparatus further comprises graphical display means arranged to display the key performance indicator for the transport stream.

Conveniently, the graphical display means is arranged to display a proportion of transport streams having a key performance indicator exceeding a predetermined threshold value.

Advantageously, the apparatus is arranged to analyse an MPEG-2 transport stream.

According to a second aspect of the invention there is provided a method of calculating a quality metric for a multimedia transport stream comprising the steps of: decoding the transport stream; performing a plurality of tests on the decoded transport stream; characterised by: calculating a ratio of failed to total instances of each test per unit time to obtain a respective test failure ratio for each test; assigning a weighting to each test to obtain a respective test weighting; and calculating a weighted average of the respective test failure ratios to determine a key performance indicator for the transport stream.

Preferably, the step of performing a plurality of tests comprises performing a plurality of tests of differing significance rankings respectively; and the step of assigning a weighting to each test comprises assigning weightings using the respective rankings of the tests.

Conveniently, the step of performing a plurality of tests comprises performing a plurality of tests in each of a plurality of classes of tests of differing priorities of the classes respectively and the step of assigning weightings comprises weighting the test ratios with the respective priorities of the classes.

Advantageously, the step of performing a plurality of tests comprises performing a plurality of tests with differing significance rankings respectively in each of a plurality of classes of differing priorities of the classes respectively and the step of assigning weightings comprises weighting the respective test ratios dependent upon the respective rankings within the classes and the step of calculating a weighted average comprises determining a respective key performance indicator for at least one of the classes of tests.

Conveniently, the step of assigning weightings comprises assigning a weighting to each class of test based on a priority of the class of tests and the step of calculating a weighted average comprises determining a weighted average of the key performance indicators of the at least one class of tests to produce an overall key performance indicator.

Advantageously, the step of performing a plurality of tests comprises performing a plurality of tests with differing significance rankings respectively in each of a plurality of classes of tests of differing priorities of the classes respectively and the step of assigning weightings comprises weighting the respective test ratios with a product of the respective rankings within the classes and the respective priorities of the classes.

Preferably, the step of assigning a weighting comprises determining contents of a tested packet of the stream, as determined from a packet identifier (PID) of the packet, and varying the respective weighting per packet accordingly.

Advantageously, the step of assigning a weighting comprises a step of iteratively determining a weighting resulting in a key performance indicator matching a subjective assessment of the quality of the transport stream.

Advantageously, the method comprises a further step of graphically displaying the key performance indicator.

Conveniently, the step of graphically displaying the key performance indicator comprises displaying a proportion of transport streams in a network, key performance indicators of which exceed a predetermined threshold value.

Advantageously, the method is arranged to analyse an MPEG-2 transport stream.

The invention will now be described, by way of example, with reference to the accompanying drawings in which:
Figure 1 is table of examples of transport quality tests carried out for a MPEG-2 transport stream;
Figure 2 is a schematic diagram of weighting functions employed according to the invention;
Figure 3 is a flowchart of a method, according to the invention, of assigning a quality metric to a transport stream; and
Figures 4a, 4b & 4c show examples of graphical displays suitable for use with the invention.

In the Figures, like reference numbers denote like parts or processes.

A metric of MPEG transport quality may be expected to be useful to network operators. Thereby results of detailed protocol checks are reduced to a few, conveniently a single, value that represents a quality of a transport stream. An ultimate reduction may be analogous to a mean opinion score (MOS) which is a telecommunications quality metric which historically has been used to measure telephone voice quality on a scale of 1-5: (1) bad; (2) poor; (3) fair; (4) good; (5) best.

Actual audio and video quality are not a subject of this invention, which is instead concerned with transport layer quality, for example, MPEG-2 quality at a MPEG-2 transport layer.

One approach to obtaining a single metric would be to calculate a rate at which errors occur. However, a measurement of transport quality would then, disadvantageously, be independent of bit rate, whereas, for example, a hundred synchronisation errors per second is a more serious problem on a 2 Mbps transport stream than on a 200 Mbps transport stream.

It is therefore preferable to calculate a ratio or percentage of failed tests to total tests. For example, a synchronisation byte error test may be carried out on every packet. A stream that has transmitted 10,000 packets and has had 10 synchronisation byte errors has a ratio of le-3 or 0.1 %. However, a ratio measured over a whole duration of a transport stream may not be useful for monitoring a transport stream as in such a ratio the errors are averaged over the whole transport stream.

Moreover, for certain tests there are particular issues affecting selection of a useful ratio. For instance, if synchronisation loss were measured per packet, this would result in a stream that was out of synchronisation for 100 bytes being awarded a same quality as one that was out of synchronisation for 1000 bytes, since there is no concept of packet while the transport stream is out of synchronisation. An improved measure can, therefore, be obtained by measuring synchronisation loss in terms of bytes rather than packets.

It is preferable to combine the two methods and calculate a ratio of failed tests to total tests per unit time (e.g. 1 hour, although this parameter should be selectable by the network operator). To align with telecommunications terminology, this value may be termed a Key Performance Indicator (KPI).

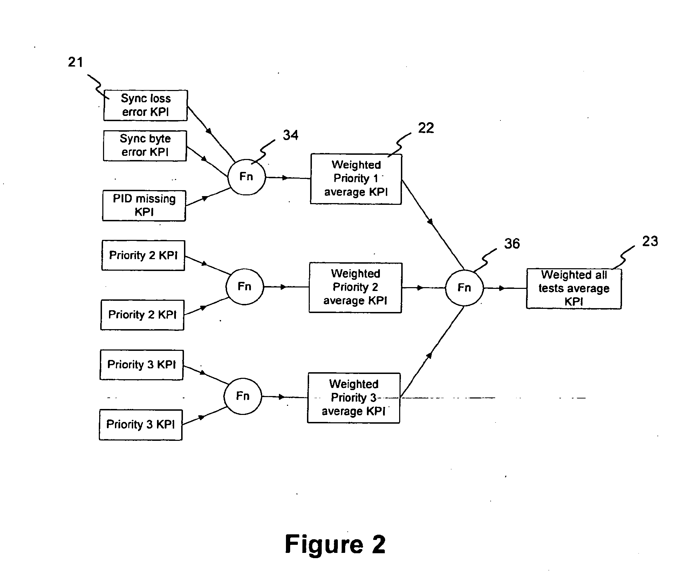

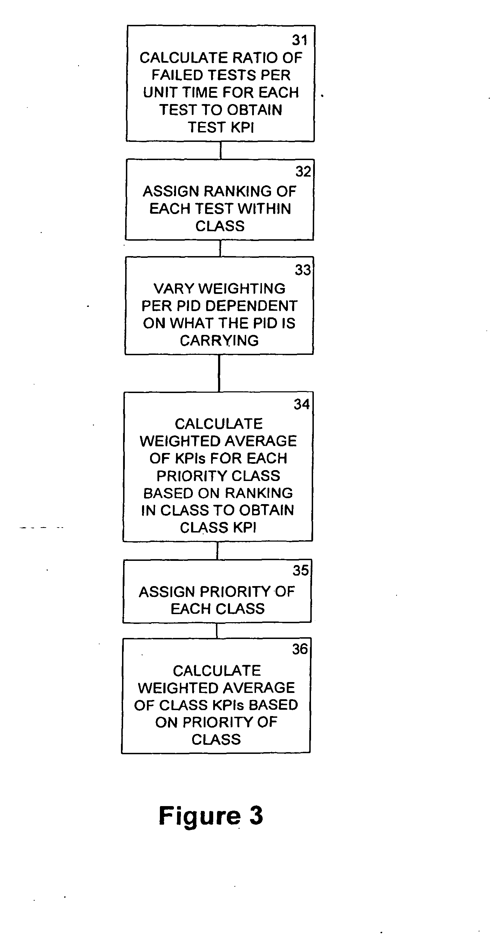

Referring to Figures 1 to 3, using this method, a failure ratio can be derived, step 31, for each test result 21 of each test 11. It is then desirable to combine each metric into a single KPI for the transport stream. This is preferably obtained by providing a weighted average of the test results with each test weighted according to the subjective effect of failure of a test on an end user's scoring of the transmission.

Thus, if a weighting is assigned to each test, such as the standard tests a subset of which are listed in Figure 1, a weighted average can be calculated of all the failure/pass ratios for each transport stream carried by a network. The tests in the table 10 of Figure 1 are arranged in three classes 14, 15, 16 based on agreed priorities of the tests. Assuming it is possible to assign weightings to all the tests in a DVB form N.m, where N is a priority of a major class 14, 15, 16 of test (prefixed 1-3) and m is a ranking within the class 14, 15, 16, then a weighted average KPI 22 is provided, step 34, for each class based on a ranking within the class (for example synchronisation loss (ranking 1.1) test would have a higher weighting than synchronisation byte error (ranking 1.2), which in turn would have a higher weighting than a missing PID (ranking 1.6)). For example, the highest ranking test could be given a weighting twice the weight of the next highest ranking test, and so on. Then an overall average 23 is calculated, step 36, for each weighted class average 22 by weighting, step 35, the class averages based on the priority, i.e. priority 1 class 14 average has a higher weighting than the priority 2 class 15 average.

This embodiment has an advantage for network operators who require a separate metric for each class 14, 15, 16 of test, for example, some network operators may require a metric only for a subset of the classes of test, for example only for a class 14 of tests with the highest priority. This result may alternatively be achieved by weighting some tests with a zero weighting. However, it will be understood that instead of applying weightings based on class priority and ranking within a class, a single weighting could be applied directly to each test respectively and a weighted average of the failure, or pass, rates of tests obtained in a single step.

Preferably, the weightings applied to the test should result in an overall metric 23 for a transport stream corresponding to a metric obtained subjectively by viewing the delivered programmes. Such weightings may be obtained by iteratively assigning weightings to tests in a sample of transport streams assigned subjective metrics, until the metrics assigned according to the invention coincide sufficiently with metrics assigned subjectively.

Some tests are applied per PID (see the third column 13 of the table 10 of Figure 1). Packets with different PIDs carry different types of information. In one embodiment, the quality metric can take this into account by varying, step 33, a weighting per PID depending on the contacts of a packet, as indicated by its PID. For example, tests on a packet carrying video are weighted higher than those on a packet carrying supplementary data.

Since the test results are all ratios in a range 0 to 1, the overall weighted average is also a ratio, which may be considered as a percentage. In the embodiment described, a lower percentage indicates a better transport quality. A network operator may be provided with a map from percentage to a metric analogous to a Mean Opinion Score (MOS) (a value between 1 and 5). If the percentage value is assumed to be the percentage of errors, E%, then the MOS analogy could be derived by (100 - E)/20. For example, a error percentage of 10% becomes a MOS analogy of 4.5. However, a person skilled in the art will understand that in other embodiments, for example if the ratio of tests passed rather than failed were used, a higher percentage metric would indicate a better transport quality.

A known T-STD buffer model would make a very good quality indicator. This test monitors a burstiness of a packeted transmission to ensure that downstream equipment is not overloaded by excessive bursts of data. Although not shown in Figure 1, the test may be incorporated into the weighted quality metric.

A transport stream file may be stored for subsequent processing. Alternatively, a transport stream may be processed in real time using a real-time digital TV interface such as DVB-ASI, DVB-SPI, SMPTE-310M, or an RF interface such as QPSK, QAM, COFDM.

Some tests performed on the transport stream are computationally expensive, for example the T-STD buffer model test mentioned previously. To perform all the tests in real-time may require the tests to be implemented in hardware or firmware such as an FPGA or ASIC. In this case an implementation system would comprise an FPGA or ASIC and a real-time digital TV interface.

With migration towards IP-based transport of video, and a resultant requirement to address MPEG-TS carried over IP, an implementation system would require access to an IP network. In such cases the implementation may include, for example, an FPGA or ASIC and a network interface device such as a Gigabit Ethernet interface card.

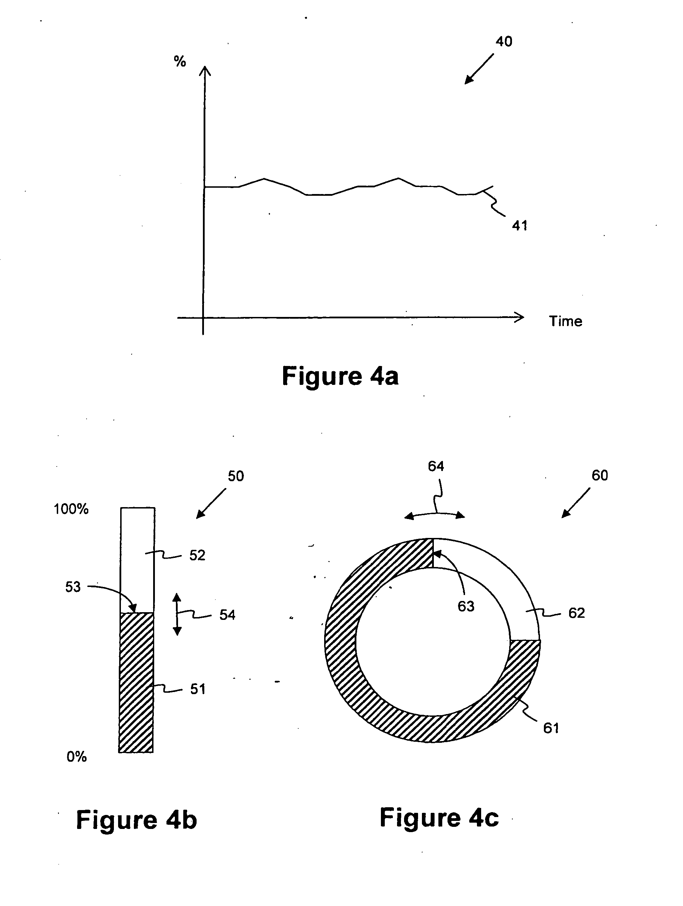

Referring to Figures 4a, 4b & 4c, since each network carries a large number of transport streams, it is advantageous to present the metrics graphically for rapid assimilation of their significance by an operator monitoring a whole network. Thus an acceptable threshold for a metric value may be obtained and the proportion of transport streams exceeding the threshold graphically displayed. For example, in a graphical display 40, an historical trace of the proportion exceeding the threshold may be displayed as illustrated in Figure 4a. Alternatively, or in addition, a two-colour bar display 50 may be used as shown in Figure 4b, in which a first colour portion 51 of the bar corresponds to a percentage of transport streams for which the metric exceeds the threshold and a second colour portion 52 for those which do not exceed the threshold. A boundary 53 between the two portions then moves in the directions of double-headed arrow 54 as the proportion of key performance indicators of transport streams which exceed the threshold changes. Alternatively, a two-colour annular display 60 as shown in Figure 4c may similarly be employed in which a first colour portion 61 of the annulus corresponds to a percentage of transport streams for which the metric exceeds the threshold and a second colour portion 62 for those which do not exceed the threshold. A boundary 63 between the two portions then moves in the directions of double-headed arrow 64 as the proportion of key performance indicators of transport streams which exceed the threshold changes.

Although this description of the invention has been in terms of tests for a transport stream using MPEG-2 compression standards for moving images and audio set by the Motion Pictures Expert Group, it will be understood that the invention is also applicable at least to other multimedia transport protocols,.

## Claims

1. An apparatus arranged to analyse a multimedia transport stream, the apparatus comprising: decoding means arranged to decode the transport stream; analysing means arranged to perform a plurality of tests (11) on the decoded transport stream, **characterised by**: calculating means arranged to calculate a ratio of failed to total instances of each test per unit time to obtain a test failure ratio (21) for each test respectively; weighting means arranged to assign a weighting, based on a predetermined significance of the test, to each test to obtain a respective test weighting; and averaging means to calculate a weighted average of the test failure ratios using the respective test weightings to determine a key performance indicator (23) for the transport stream.

2. An apparatus as claimed in claim 1, wherein the analysing means is arranged to perform a plurality of tests (11) of differing significance rankings respectively; and the weighting means is arranged to assign weightings using the respective rankings of the tests.

3. An apparatus as claimed in claims 1 or 2 wherein the analysing means is arranged to perform a plurality of tests (11) in each of a plurality of classes (14, 15, 16) of tests of differing priorities of the classes respectively and the weighting means is arranged to weight the test ratios with the respective priorities of the classes.

4. An apparatus as claimed in claim 3, wherein the analysing means is arranged to perform a plurality of tests (11) with differing significance rankings respectively in each of the plurality of classes (14, 15, 16) of differing priorities of the classes respectively and the weighting means is arranged to weight the respective test ratios (21) dependent upon the respective rankings within the classes and the averaging means is arranged to determine a respective key performance indicator for at least one of the classes of tests.

5. An apparatus as claimed in claim 4, wherein the weighting means is arranged to assign a weighting to each class (14, 15, 16) of tests (11) based on a priority of the class of tests and the averaging means is arranged to determined a weighted average of the key performance indicators (22) of the at least one class of tests to produce an overall key performance indicator (23).

6. An apparatus as claimed in claim 3, wherein the analysing means is arranged to perform a plurality of tests (11) with differing significance rankings respectively in each of a plurality of classes (14, 15, 16) of tests of differing priorities of the classes respectively and the weighting means is arranged to weight the respective test ratios (21) with a product (12) of the respective rankings within the classes and the respective priorities of the classes.

7. An apparatus as claimed in any of the preceding claims, wherein the respective weightings are derived iteratively, to obtain a key performance indicator (23) matching a subjective assessment of the transport stream quality.

8. An apparatus as claimed in any of the preceding claims, wherein the analysing means is arranged to determine contents of a tested packet of the transport stream, as identified by a packet identifier (PID) of the packet, and the weighting means is arranged to vary a respective weighting per packet accordingly.

9. An apparatus as claimed in any of the preceding claims further comprising a graphical display means (40; 50; 60) arranged to display the key performance indicator for the transport stream.

10. An apparatus as claimed in claim 9, wherein the graphical display means (40; 50; 60) is arranged to display a proportion (41; 51; 61) of transport streams having a key performance indicator exceeding a predetermined threshold value.

11. An apparatus as claimed in any of the preceding claims, arranged to analyse an MPEG-2 transport stream.

12. A method of calculating a quality metric (23) for a multimedia transport stream comprising the steps of:
a. decoding the transport stream;
b. performing a plurality of tests (11) on the decoded transport stream; **characterised by**:
c. calculating (31) a ratio of failed to total instances of each test per unit time to obtain a respective test failure ratio (21) for each test (11);
d. assigning a weighting to each test to obtain a respective test weighting;
and
e. calculating a weighted average of the respective test failure ratios (21) to determine a key performance indicator (23) for the transport stream.

13. A method as claimed in claim 12, wherein the step of performing a plurality of tests comprises performing a plurality of tests (11) of differing significance rankings respectively; and the step of assigning (32) a weighting to each test comprises assigning weightings using the respective rankings of the tests.

14. A method as claimed in claim 12, wherein the step of performing a plurality of tests comprises performing a plurality of tests (11) in each of a plurality of classes (14, 15, 16) of tests of differing priorities of the classes respectively and the step of assigning (32) weightings comprises weighting the test ratios with the respective priorities of the classes.

15. A method as claimed in claim 12, wherein the step of performing a plurality of tests comprises performing a plurality of tests (11) with differing significance rankings respectively in each of a plurality of classes (14, 15, 16) of differing priorities of the classes respectively and the step of assigning (32) weightings comprises weighting the respective test ratios (21) dependent upon the respective rankings within the classes and the step of calculating (34) a weighted average comprises determining a respective key performance indicator (22) for at least one of the classes (14, 15, 16) of tests.

16. A method as claimed in claim 12, wherein the step of assigning (32) weightings comprises assigning a weighting to each class (14, 15, 16) of test based on a priority of the class of tests and the step of calculating (36) a weighted average comprises determining a weighted average of the key performance indicators (22) of the at least one class of tests to produce an overall key performance indicator (23).

17. A method as claimed in claim 12, wherein the step of performing a plurality of tests (11) comprises performing a plurality of tests with differing significance rankings respectively in each of a plurality of classes (14, 15, 16) of tests of differing priorities of the classes respectively and the step of assigning (32) weightings comprises weighting the respective test ratios (21) with a product (12) of the respective rankings within the classes and the respective priorities of the classes.

18. A method as claimed in any of claims 12 to 17, wherein the step of assigning (32) a weighting comprises determining contents of a tested packet of the stream, as determined from a packet identifier (PID) of the packet, and varying the respective weighting per packet accordingly.

19. A method as claimed in any of claims 12 to 18, wherein the step of assigning (32) a weighting comprises a step of iteratively determining a weighting resulting in a key performance indicator (23) matching a subjective assessment of the quality of the transport stream.

20. A method as claimed in any of claims 12 to 19, comprising a further step of graphically displaying the key performance indicator (23).

21. A method as claimed in claim 20, wherein the step of graphically displaying the key performance indicator comprises displaying a proportion (41; 51; 61) of transport streams in a network, key performance indicators of which exceed a predetermined threshold value.

22. A method as claimed in any of claims 12 to 21, arranged to analyse an MPEG-2 transport stream.

## Patentansprüche

1. Vorrichtung, die zum Analysieren eines Multimedia-Transportstroms angeordnet ist, wobei die Vorrichtung folgendes umfasst: eine Decodierungseinrichtung zum Decodieren des Transportstroms; eine Analyseeinrichtung, die zum Ausführen einer Mehrzahl von Tests (11) an dem decodierten Transportstrom angeordnet ist, **gekennzeichnet durch**: eine Berechnungseinrichtung, die zum Berechen eines Verhältnisses fehlgeschlagener Fälle zu den Fällen insgesamt jedes Tests je Zeiteinheit eingeordnet ist, um ein entsprechendes Testausfallverhältnis (21) für jeden Test zu erhalten; eine Gewichtungseinrichtung, die so angeordnet ist, dass sie auf der Basis einer vorbestimmten Signifikanz des Tests jedem Test eine Gewichtung zuordnet, so dass eine entsprechende Testgewichtung erhalten wird; und eine Mittelwertbildungseinrichtung zum Berechnen eines gewichteten Mittelwertes der Testausfallverhältnisse unter Verwendung der entsprechenden Testgewichtungen, um eine Leistungskennzahl (23) für den Transportstrom zu bestimmen.

2. Vorrichtung nach Anspruch 1, wobei die Analyseeinrichtung für die Ausführung einer Mehrzahl von Tests (11) entsprechend unterschiedlicher Signifikanzrangwerte angeordnet ist; und wobei die Gewichtungseinrichtung so angeordnet ist, dass sie unter Verwendung der entsprechenden Rangwerte der Tests Gewichtungen zuweist.

3. Vorrichtung nach einem der Ansprüche 1 oder 2, wobei die Analyseeinrichtung für die Ausführung einer Mehrzahl von Tests (11) in jeder entsprechenden einer Mehrzahl von Testklassen (14, 15, 16) unterschiedlicher Prioritätenangeordnet ist, und wobei die Gewichtungseinrichtung angeordnet ist, um die Testverhältnisse mit den entsprechenden Prioritätender Klassen zu gewichten.

4. Vorrichtung nach Anspruch 3, wobei die Analyseeinrichtung angeordnet ist zum Ausführen einer Mehrzahl von Tests (11) mit entsprechend unterschiedlichen Signifikanzrangwerten in jeder der Mehrzahl von Klassen (14, 15, 16) entsprechend unterschiedlicher Prioritäten der Klassen, und wobei die Gewichtungseinrichtung zur Gewichtung der entsprechenden Testverhältnisse (21) abhängig von den entsprechenden Rangwerten innerhalb der Klassen angeordnet ist, und wobei die Mittelwertbildungseinrichtung so angeordnet ist, dass eine entsprechende Leistungskennzahl für mindestens eine der Testklassen bestimmt wird.

5. Vorrichtung nach Anspruch 4, wobei die Gewichtungseinrichtung so angeordnet ist, dass jeder Klasse (14, 15, 16) von Tests (11) eine Gewichtung auf der Basis einer Priorität der Testklasse zugewiesen wird, und wobei die Mittelwertbildungseinrichtung so angeordnet ist, dass sie einen gewichteten Mittelwert der Leistungskennzahlen(22) der mindestens einen Testklasse bestimmt, so dass eine Leistungskennzahl (23) insgesamt erzeugt wird.

6. Vorrichtung nach Anspruch 3, wobei die Analyseeinrichtung so angeordnet ist, dass sie eine Mehrzahl von Tests (11) mit entsprechenden sich unterscheidenden Signifikanzrangwerten in jeder Klasse einer Mehrzahl von Testklassen (14, 15, 16) mit entsprechend unterschiedlichen Prioritätender Klassen ausführt, und wobei die Gewichtungseinrichtung so angeordnet ist, dass sie die entsprechenden Testverhältnisse (21) gewichtet mit einem Produkt (12) der entsprechenden Rangwerte innerhalb der Klassen und der entsprechenden Prioritäten der Klassen.

7. Vorrichtung nach einem der vorstehenden Ansprüche, wobei die entsprechenden Gewichtungen iterativ abgeleitet werden, so dass eine Leistungskennzahl (23) erhalten wird, die mit einer subjektiven Beurteilung der Transportstromqualität übereinstimmt.

8. Vorrichtung nach einem der vorstehenden Ansprüche, wobei die Analyseeinrichtung so angeordnet ist, dass sie den Inhalt eines geprüften Pakets des Transportstroms bestimmt, gemäß der Identifizierungdurch einen Paketbezeichner (PID) des Pakets, und wobei die Gewichtungseinrichtung so angeordnet ist, dass sie eine entsprechende Gewichtung je Paket entsprechend anpasst.

9. Vorrichtung nach einem der vorstehenden Ansprüche, wobei die Vorrichtung ferner eine Grafikanzeigeeinrichtung (40; 50; 60) umfasst, die so angeordnet ist, dass sie die Leistungskennzahl für den Transportstrom anzeigt.

10. Vorrichtung nach Anspruch 9, wobei die Grafikanzeigeeinrichtung (40; 50; 60) so angeordnet ist, dass sie einen Teil (41; 51; 61) der Transportströme mit einer Leistungskennzahl anzeigt, welche einen vorbestimmten Schwellenwert übersteigt.

11. Vorrichtung nach einem der vorstehenden Ansprüche, wobei die Vorrichtung zum Analysieren eines MPEG-2-Transportstroms angeordnet ist.

12. Verfahren zum Berechnen einer Qualitätsmetrik (23) für einen Multimedia-Transportstrom, wobei das Verfahren die folgenden Schritte umfasst:
a) das Decodieren des Transportstroms;
b) das Durchführen einer Mehrzahl von Tests (11) an dem decodierten Transportstrom;
**gekennzeichnet durch**:
c) das Berechnen (31) eines Verhältnisses der fehlgeschlagenen Fälle zu den Fällen insgesamt jedes Tests je Zeiteinheit, so dass ein entsprechendes Testausfallverhältnis (21) für jeden Test (11) erhalten wird;
d) das Zuweisen einer Gewichtung zu jedem Test, so dass eine entsprechende Testgewichtung erhalten wird; und
e) das Berechnen (31) eines gewichteten Mittelwertsder entsprechenden Testausfallverhältnisse (21), um eine Leistungskennzahl (23) für den Transportstrom zu bestimmen.

13. Verfahren nach Anspruch 12, wobei der Schritt des Durchführens einer Mehrzahl von Tests das Durchführen einer Mehrzahl von Tests (11) mit entsprechend unterschiedlichen Signifikanzrangwerten umfasst; und wobei der Schritt des Zuweisens (32) einer Gewichtung zu jedem Test das Zuweisen von Gewichtungen unter Verwendung der entsprechenden Rangwerte der Tests umfasst.

14. Verfahren nach Anspruch 12, wobei der Schritt des Durchführens einer Mehrzahl von Tests das Durchführen einer Mehrzahl von Tests (11) in jeder einer Mehrzahl von Testklassen (14, 15, 16) mit entsprechend unterschiedlichen Prioritätender Klassen umfasst; und wobei der Schritt des Zuweisens (32) der Gewichtungen das Gewichten der Testverhältnisse mit den entsprechenden Prioritätender Klassen umfasst.

15. Verfahren nach Anspruch 12, wobei der Schritt des Durchführens einer Mehrzahl von Tests das Durchführen einer Mehrzahl von Tests (11) mit entsprechend unterschiedlichen Signifikanzrangwerten in jeder Klasse einer Mehrzahl von Klassen (14, 15, 16) mit entsprechend unterschiedlichen Prioritätender Klassen umfasst; und wobei der Schritt des Zuweisens (32) der Gewichtungen das Gewichten der entsprechenden Testverhältnisse (21) abhängig von den entsprechenden Rangwerten innerhalb der Klassen umfasst; und wobei der Schritt des Berechnens (34) eines gewichteten Mittelwertes das Bestimmen einer entsprechenden Leistungskennzahl (22) für mindestens eine Klasse der Testklassen (14, 15, 16) umfasst.

16. Verfahren nach Anspruch 12, wobei der Schritt des Zuweisens (32) von Gewichtungen das Zuweisen einer Gewichtung zu jeder Testklasse (14, 15, 16) auf der Basis einer Priorität der Testklasse umfasst, und wobei der Schritt des Berechnens (36) eines gewichteten Mittelwertsdas Bestimmen eines gewichteten Mittelwerts der Leistungskennzahlen (22) der mindestens einen Testklasse umfasst, so dass eine Leistungskennzahl (23) insgesamt erzeugt wird.

17. Verfahren nach Anspruch 12, wobei der Schritt des Durchführens einer Mehrzahl von Tests (11) das Durchführen einer Mehrzahl von Tests mit sich entsprechend unterscheidenden Signifikanzrangwerten in jeder Klasse einer Mehrzahl von Testklassen (14, 15, 16) mit unterschiedlichen Prioritäten der entsprechenden Klassen umfasst, und wobei der Schritt des Zuweisens (32) von Gewichtungen das Gewichten der entsprechenden Testverhältnisse (21) mit einem Produkt (12) der entsprechenden Rangwerte innerhalb der Klassen und der entsprechenden Prioritätender Klassen umfasst.

18. Verfahren nach einem der Ansprüche 12 bis 17, wobei der Schritt des Zuweisens (32) einer Gewichtung das Bestimmen des Inhalts eines geprüften Pakets des Stroms umfasst, gemäß der Bestimmung anhand eines Paketbezeichners (PID) des Pakets, und wobei die entsprechende Gewichtung je Paket entsprechend angepasst wird.

19. Verfahren nach einem der Ansprüche 12 bis 18, wobei der Schritt des Zuweisens (32) einer Gewichtung einen Schritt des iterativen Bestimmens einer Gewichtung umfasst, die zu einer Leistungskennzahl (23) führt, welche einer subjektiven Beurteilungder Qualität des Transportstroms entspricht.

20. Verfahren nach einem der Ansprüche 12 bis 19, wobei dieses einen weiteren Schritt des grafischen Anzeigens der Leistungskennzahl (23) umfasst.

21. Verfahren nach Anspruch 20, wobei der Schritt des grafischen Anzeigens der Leistungskennzahl das Anzeigen eines Teils (41; 51; 61) des Transportstroms in einem Netzwerk umfasst, dessen Leistungskennzahlen einen vorbestimmten Schwellenwert überschreiten.

22. Verfahren nach einem der Ansprüche 12 bis 21, mit einer Anordnung zum Analysieren eines MPEG-2-Transportstroms.

## Revendications

1. Appareil agencé pour analyser un flux de transport multimédia, l'appareil comprenant : des moyens de décodage agencés pour décoder le flux de transport ; des moyens d'analyse agencés pour effectuer une pluralité de tests (11) sur le flux de transport décodé, **caractérisé par** : des moyens de calcul agencés pour calculer un rapport des instances échouées sur les instances totales de chaque test par unité de temps pour obtenir un rapport d'échec de test (21) pour chaque test, respectivement ; des moyens de pondération agencés pour attribuer une pondération, en fonction d'une importance prédéterminée du test, à chaque test pour obtenir une pondération de test respective ; et des moyens de moyennage pour calculer une moyenne pondérée des rapports d'échec de test en utilisant les pondérations de test respectives afin de déterminer un indicateur clé de performance (23) pour le flux de transport.

2. Appareil selon la revendication 1, dans lequel les moyens d'analyse sont agencés pour effectuer une pluralité de tests (11) ayant différents classements d'importance, respectivement ; et les moyens de pondération sont agencés pour attribuer des pondérations en utilisant les classements respectifs des tests.

3. Appareil selon la revendication 1 ou 2, dans lequel les moyens d'analyse sont agencés pour effectuer une pluralité de tests (11) dans chacune d'une pluralité de classes (14, 15, 16) de tests de différentes priorités des classes, respectivement, et les moyens de pondération sont arrangés pour pondérerles rapports de test avec les priorités respectives des classes.

4. Appareil selon la revendication 3, dans lequel les moyens d'analyse sont agencés pour effectuer une pluralité de tests (11) ayant différents classements d'importance, respectivement, dans chacune de la pluralité de classes (14, 15, 16) de différentes priorités des classes, respectivement et les moyens de pondération sont agencés pour pondérer les rapports de test respectifs (21) en fonction des classements respectifs dans les classes et les moyens de moyennage sont agencés pour déterminer un indicateur clé de performance respectif pour au moins l'une des classes de tests.

5. Appareil selon la revendication 4, dans lequel les moyens de pondération sont agencés pour attribuer une pondération à chaque classe (14, 15, 16) de tests (11) en fonction d'une priorité de la classe de tests et les moyens de moyennage sont agencés pour déterminer une moyenne pondéréedes indicateurs clés de performance (22) de l'au moins une classe de tests pour produire un indicateur clé de performance global (23).

6. Appareil selon la revendication 3, dans lequel les moyens d'analyse sont agencés pour effectuer une pluralité de tests (11) ayant différents classements d'importance, respectivement, dans chacune de la pluralité de classes (14, 15, 16) de tests de différentes priorités des classes, respectivement et les moyens de pondération sont agencés pour
pondérer les rapports de test respectifs (21) avec un produit (12) des classements respectifs dans les classes et les priorités respectives des classes.

7. Appareil selon l'une quelconque des revendications précédentes, dans lequel les pondérations respectives sont dérivées de manière itérative, pour obtenir un indicateur clé de performance (23) correspondant à une évaluation subjective de la qualité du flux de transport.

8. Appareil selon l'une quelconque des revendications précédentes, dans lequel les moyens d'analyse sont agencés pour déterminer le contenu d'un paquet testé du flux de transport, comme identifié par un identifiant de paquet (PID) du paquet, et les moyens de pondération sont agencés pour faire varier une pondération respective par paquet en conséquence.

9. Appareil selon l'une quelconque des revendications précédentes, comprenant en outre des moyens d'affichage graphique (40 ; 50 ; 60) agencés pour afficher l'indicateur clé de performance pour le flux de transport.

10. Appareil selon la revendication 9, dans lequel les moyens d'affichage graphique (40 ; 50 ; 60) sont agencés pour afficher une proportion (41 ; 51 ; 61) des flux de transport ayant un indicateur clé de performance supérieur à une valeur seuil prédéterminée.

11. Appareil selon l'une quelconque des revendications précédentes, agencé pour analyser un flux de transport MPEG-2.

12. Procédé de calcul d'une mesure de la qualité (23) pour un flux de transport multimédia comprenant les étapes consistant à :
a. décoder le flux de transport ;
b. effectuer une pluralité de tests (11) sur le flux de transport décodé ; **caractérisé en ce qu'**il comprend les étapes consistant à :
c. calculer (31) un rapport des instances échouées sur les instances totales de chaque test par unité de temps pour obtenir un rapport d'échec de test respectif (21) pour chaque test (11) ;
d. attribuer une pondération à chaque test pour obtenir une pondération de test respective ; et
e. calculer une moyenne pondéréedes rapports d'échec de test respectifs (21) pour déterminer un indicateur clé de performance (23) pour le flux de transport.

13. Procédé selon la revendication12, dans lequel la réalisation d'une pluralité de tests comprend l'étape consistant à effectuer une pluralité de tests (11) ayant différents classements d'importance, respectivement ; et l'attribution (32) d'une pondération à chaque test comprend l'étape consistant à attribuer des pondérations en utilisant les classements respectifs des tests.

14. Procédé selon la revendication12, dans lequel la réalisation d'une pluralité de tests comprend l'étape consistant à effectuer une pluralité de tests (11) dans chacune d'une pluralité de classes (14, 15, 16) de tests de différentes priorités des classes, respectivement, et l'attribution (32) des pondérations comprend l'étape consistant à pondérer les rapports de test avec les priorités respectives des classes.

15. Procédé selon la revendication12, dans lequel la réalisation d'une pluralité de tests comprend l'étape consistant à effectuer une pluralité de tests (11) ayant différents classements d'importance, respectivement, dans chacune d'une pluralité de classes (14, 15, 16) de différentes priorités des classes, respectivement et l'attribution (32) de pondérations comprend l'étape consistant à pondérerles rapports de test respectifs (21) en fonction des classements respectifs dans les classes et le calcul (34) d'une moyenne pondéréecomprend l'étape consistant à déterminer un indicateur clé de performance respectif (22) pour au moins l'une des classes (14, 15, 16) de tests.

16. Procédé selon la revendication 12, dans lequel l'attribution (32) de pondérations comprend l'étape consistant à attribuer une pondération à chaque classe (14, 15, 16) de tests en fonction d'une priorité de la classe de tests et le calcul (36) d'une moyenne pondérée comprend l'étape consistant à déterminer une moyenne pondéréedes indicateurs clés de performance (22) de l'au moins une classe de tests pour produire un indicateur clé de performance global (23).

17. Procédé selon la revendication12, dans lequel la réalisation d'une pluralité de tests (11) comprend l'étape consistant à effectuer une pluralité de tests ayant différents classements d'importance, respectivement, dans chacune de la pluralité de classes (14, 15, 16) de tests de différentes priorités des classes, respectivement et l'attribution (32) de pondérations comprend l'étape consistant à pondérerles rapports de test respectifs (21) avec un produit (12) des classements respectifs dans les classes et les priorités respectives des classes.

18. Procédé selon l'une quelconque des revendications12 à 17, dans lequel l'attribution (32) d'une pondération comprend les étapes consistant à déterminer le contenu d'un paquet testé du flux, comme déterminé à partir d'un identifiant de paquet (PID) du paquet, et à varier la pondération respective par paquet en conséquence.

19. Procédé selon l'une quelconque des revendications 12 à 18, dans lequel l'attribution (32) d'une pondération comprend l'étape consistant à déterminer de manière itérative une pondération résultant en un indicateur clé de performance (23) correspondant à une évaluation subjective de la qualité du flux de transport.

20. Procédé selon l'une quelconque des revendications12 à 19, comprenant l'étape supplémentaire consistant à afficher de manière graphique l'indicateur clé de performance (23).

21. Procédé selon la revendication20, dans lequel l'affichage de manière graphique de l'indicateur clé de performance comprend l'étape consistant à afficher une proportion (41 ; 51 ; 61) des flux de transport dans un réseau, dont les indicateurs clés de performance dépassent une valeur seuil prédéterminée.

22. Procédé selon l'une quelconque des revendications 12 à 21, agencé pour analyser un flux de transport MPEG-2.
